# EUROPÄISCHE PATENTANMELDUNG

(11) **EP 3 398 415 A1**
(43) Veröffentlichungstag der Anmeldung: **07.11.2018**
(21) Anmeldenummer: 18170429.7
(22) Anmeldetag: 02.05.2018
(51) Int. Cl.: A01B 19/04, A01B 23/02, A01B 23/04, A01D 80/02

(54) **AUFSATZ FÜR ZINKEN**

(30) Priorität: 02.05.2017 DE 102017109371
(71) Anmelder: Wallner, Klaus, 94439 Rossbach-Münchsdorf Bayern (DE)
(72) Erfinder: WALLNER, Klaus, 94439 Rossbach-Münchsdorf Bayern (DE); KEIL, Bernd, 38154 Königslutter Lelm (DE)
(74) Vertreter: Lichtnecker, Markus Christoph

(57) **Zusammenfassung**

Die Erfindung betrifft einen Aufsatz für mehrere Zinken einer Bodenbearbeitungsvorrichtung, umfassend eine Befestigungsvorrichtung mit zumindest zwei Befestigungseinheiten, welche zur lösbaren Befestigung an unterschiedlichen Zinken ausgebildet sind, und zumindest eine Bearbeitungseinheit, welche an der Befestigungsvorrichtung fixiert oder fixierbar ist.

## Beschreibung

Die Erfindung betrifft einen Aufsatz für mehrere Zinken einer landwirtschaftlichen Bodenbearbeitungsvorrichtung.

Bodenbearbeitungsvorrichtungen mit einer Vielzahl an in Reihen angeordneten Zinken sind grundsätzlich bekannt. Sind die Zinken als Striegelzinken ausgebildet, werden derartige Bodenbearbeitungsvorrichtungen auch als Strohstriegel bezeichnet. Diese Strohstriegel verteilen beispielsweise Stroh auf die gesamte Arbeitsbreite. Ferner kommen diese beim Ackerbau bei der Unkrautbekämpfung und/oder Bodenlockerung zum Einsatz. Durch das Striegeln wird der Boden aufgekratzt, sodass Ausfallgetreide und Unkraut bzw. Ungräser schneller auskeimen können. Die Keimlinge können in einem weiteren Arbeitsgang beispielsweise eingeackert und als Naturdünger verwendet werden. Zudem können durch das Striegeln Schädlinge wie Schnecken bzw. Schneckeneier an die Oberfläche befördert werden, an welcher diese austrocknen.

Ferner können Gülle, Dünger, Saatgut und/oder beispielswiese Mulchstroh durch einen Strohstriegel in den Boden eingearbeitet werden. Der Strohstriegel ermöglicht durch seine vergleichsweise große Arbeitsbreite von bis zu rund 12 Metern ein effizientes Arbeiten.

Nachteilig an herkömmlich eingesetzten Striegeln ist jedoch, dass die Zinken relativ schmal und weit voneinander beabstandet sind, sodass durch einen Zinken nur ein kleiner Bereich des Bodens bearbeitet wird. Auch haben die Zinken einen festen Durchmesser, welcher jedoch nicht für alle Anbauböden gleichermaßen geeignet ist. So ist beispielsweise ein Zinken mit einem Durchmesser von 16 mm nicht für die Bearbeitung eines Getreidefeldes im Frühjahr geeignet. Für unterschiedliche Böden und Einsatzbereiche muss bisher somit auf separate Bearbeitungsvorrichtungen zurückgegriffen werden, was mit hohen Kosten verbunden ist.

DE 20 2015 105 952 U1 offenbart einen Aufsatz für einen Zinken eines Striegels, der den Wirkbereich des Zinkens verändert. Ein Verbreiterungselement oder zwei Aufsatzzinken können dabei über eine Hülse unmittelbar an einem Zinken befestigt werden.

Nachteilig daran ist, dass sich die beiden Aufsatzzinken verdrehen können, da diese an nur einem Zinken befestigt sind. Auch ist die Funktionalität eingeschränkt, da zwar der Wirkbereich des Zinkens verändert wird, am Ende jedoch stets ein oder mehrere Zinken mit größerem oder kleinerem Wirkbereich vorliegen. Andere Funktionen sind aufgrund der unmittelbaren Montage der Bearbeitungseinheit am Zinken nicht möglich.

Es handelt sich bei den herkömmlichen Strohstriegeln somit um Einzweckgeräte, d.h. diese werden bisher lediglich zum Striegeln verwendet.

Es ist daher eine Aufgabe der Erfindung, einen Aufsatz für Zinken einer Bodenbearbeitungsvorrichtung bzw. eine Bodenbearbeitungsvorrichtung derart zu verbessern, dass ein sicherer Halt an den Zinken gewährleistet ist, wobei insbesondere eine Vielzahl an Nutzungsmöglichkeiten bei der Bearbeitung des Bodens ermöglicht wird.

Die Lösung dieser Aufgabe erfolgt durch die Gegenstände der unabhängigen Ansprüche.

Erfindungsgemäß umfasst der Aufsatz für mehrere Zinken einer Bodenbearbeitungsvorrichtung eine Befestigungsvorrichtung mit zumindest zwei Befestigungseinheiten, welche zur lösbaren Befestigung an unterschiedlichen Zinken ausgebildet sind.

Der Aufsatz kann auf diese Weise an wenigstens zwei Zinken befestigt werden. Durch den Aufsatz werden die Zinken miteinander verbunden.

Insbesondere sind die Zinken nebeneinander angeordnet, beispielsweise in Reihe oder diagonal. Jede Befestigungseinheit ist an einem der Zinken befestigbar. Dadurch verdreht sich der Aufsatz insbesondere auch bei hohen Belastungen nicht relativ zu den Zinken, wie es beispielsweise bei der Befestigung an nur einem Zinken der Fall sein kann.

Es war überraschend, dass sich der Halt an den Zinken durch die zwei Befestigungseinheiten derart deutlich verbessert.

Vorzugsweise umfasst die Befestigungsvorrichtung genau zwei Befestigungseinheiten. So kann der Aufsatz z.B. einem Doppelzinken zugeordnet sein. Ein Doppelzinken ist ein Striegel mit zwei miteinander, insbesondere einstückig, verbundenen Zinken. Die beiden Zinken sind dabei über Federn miteinander verbunden, welche einerseits zur Befestigung an der Bodenbearbeitungsvorrichtung und andererseits als seitliche Stoßdämpfer dienen. Unebenheiten im Boden können somit seitlich kompensiert werden.

Die Befestigungsvorrichtung kann jedoch auch mehr als zwei, insbesondere mindestens drei, vier, fünf, sechs, sieben oder acht, Befestigungseinheiten aufweisen.

Der Aufsatz ist insbesondere an einem Endbereich der Zinken befestigbar. Die ursprünglichen Zinken kommen somit nicht mit dem Boden in Kontakt.

Alternativ kann der Aufsatz auch an einer höheren Position der Zinken befestigt werden, sodass die ursprünglichen Zinken mit dem Boden in Kontakt kommen und diesen bearbeiten können.

Zur lösbaren Befestigung kann die Befestigungseinheit beispielsweise eine Aufnahme aufweisen, in der ein Zinken aufgenommen und befestigt werden kann.

Durch die lösbare Befestigung an den Zinken ist der Aufsatz austauschbar. Unterschiedliche Aufsätze können folglich auf die Zinken aufgesetzt werden. Dadurch können die Nutzungsmöglichkeiten deutlich erhöht werden.

Der Aufsatz umfasst zumindest eine Bearbeitungseinheit, welche an der Befestigungsvorrichtung fixiert oder fixierbar ist. Der Aufsatz kann lediglich eine Bearbeitungseinheit aufweisen, z.B. einen Zinken. Vorzugsweise umfasst jeder Aufsatz jedoch wenigstens zwei, drei, vier, fünf, sechs, sieben, acht, neun, zehn, elf oder zwölf Bearbeitungseinheiten. Die Anzahl an Bearbeitungseinheiten ist grundsätzlich beliebig.

Ist der Aufsatz an den Zinken befestigt, erfolgt die Bearbeitung des Bodens vorzugsweise durch die Bearbeitungseinheit und nicht durch die ursprünglichen Zinken. Die ursprünglichen Zinken dienen hierbei lediglich als Halterung.

Alternativ können auch die ursprünglichen Zinken mit dem Boden in Kontakt gelangen und diesen zusammen mit der Bearbeitungseinheit bearbeiten.

Die Bearbeitungseinheit bildet gewissermaßen ein zusätzliches Werkzeug, welches insbesondere auch einen anderen Zweck als die ursprünglichen Zinken haben kann.

Bei der Bearbeitungseinheit und der Befestigungsvorrichtung handelt es sich insbesondere um separate Bauteile. Die Bearbeitungseinheit entspricht somit nicht der Befestigungsvorrichtung. So bearbeitet die Bearbeitungseinheit den Boden, während die Befestigungsvorrichtung für die stabile Befestigung an den Zinken sorgt.

Durch den erfindungsgemäßen Aufsatz kann die Funktionalität einer Bodenbearbeitungsvorrichtung deutlich erhöht werden. Dadurch, dass das Grundgerät gleich bleibt und lediglich die Aufsätze bzw. die Bearbeitungseinheiten der Aufsätze ausgetauscht werden, können Kosten gespart werden. Dennoch ist eine Vielzahl an Nutzungsmöglichkeiten bei der Bearbeitung des Bodens möglich. So kann das Grundgerät mehrere Aufgaben erfüllen und insbesondere über das ganze Jahr genutzt werden.

Ein herkömmliches Einzweckgerät kann auf diese Weise zu einem Multizweckgerät umgerüstet werden.

Weiterbildungen der Erfindung sind auch den abhängigen Ansprüchen, der Beschreibung sowie den beigefügten Zeichnungen zu entnehmen.

Gemäß einer Ausführungsform umfasst die Befestigungseinheit eine Einhänge-, Klemm-, Steck-, Rast- und/oder Schraubeinheit. Auf diese Weise kann die Befestigungsvorrichtung sicher am Zinken befestigt werden.

Insbesondere ist eine Kombination zwischen einer Steck- und einer Schraubeinheit denkbar. So kann der Zinken z.B. in eine Aussparung der Befestigungseinheit eingesteckt und anschließend verschraubt werden.

Auch eine Kombination zwischen einer Steck- und einer Rasteinheit ist ebenso denkbar. Dabei kann der Zinken z.B. in eine Aussparung der Befestigungseinheit eingesteckt werden und verrasten.

Nach einer weiteren Ausführungsform umfasst die Befestigungseinheit einen U-Haken. Dabei kann der Zinken in den U-Haken eingesteckt werden. Die Schenkel des U-Hakens können anschließend festgeschraubt werden. Dazu können die Enden der Schenkel vorzugsweise ein Gewinde aufweisen. Über Muttern kann der U-Haken dann an der Befestigungsvorrichtung verschraubt werden.

Gemäß einer weiteren Ausführungsform umfasst die Befestigungsvorrichtung einen sich quer erstreckenden Träger, welcher die Befestigungseinheiten aufweist oder an dem die Befestigungseinheiten angeordnet sind.

Vorzugsweise erstreckt sich der Träger im montierten Zustand über zwei oder mehr Zinken. Der Träger ist insbesondere rechtwinklig zu den Zinken und/oder zur Fahrtrichtung orientiert.

Der Träger kann beispielsweise als Platte, Profil, Schiene oder Leiste ausgebildet sein. Insbesondere kann der Träger ein Metallmaterial bzw. Kunststoffmaterial umfassen oder daraus ausgebildet sein. Der Träger kann insbesondere aus Stahl bestehen, beispielsweise aus Hardox ®.

Nach einer weiteren Ausführungsform ist die Bearbeitungseinheit von der Befestigungsvorrichtung lösbar. Beispielsweise kann die Bearbeitungseinheit durch eine Einhänge-, Klemm-, Steck-, Rast- und/oder Schraubeinheit lösbar an der Befestigungsvorrichtung fixiert sein.

Unterschiedliche Bearbeitungseinheiten können auf diese Weise an der Befestigungsvorrichtung befestigt werden. Die Befestigungsvorrichtung dient gewissermaßen als Adapter zwischen den Zinken und den Bearbeitungseinheiten.

Die Bearbeitungseinheiten können eine unterschiedliche Funktion aufweisen. Auch können Bearbeitungseinheiten desselben Typs gegeneinander ausgetauscht werden, beispielsweise aufgrund von Verschleißerscheinungen.

Gemäß einer weiteren Ausführungsform umfasst die Bearbeitungseinheit einen Zinken, eine Gänsefußschare oder eine Ausbringungseinheit oder ist dazu ausgebildet.

Die Zinken können einen anderen Wirkbereich als die ursprünglichen Zinken aufweisen. So kann der Wirkbereich des Zinkens im Vergleich zum ursprünglichen Zinken insbesondere verkleinert sein. Beispielsweise kann ein dünnerer Zinken an der Befestigungsvorrichtung montiert werden. Dadurch kann die Bodenbearbeitungsvorrichtung z.B. auch im Frühjahr bei der Bearbeitung eines Getreidefeldes eingesetzt werden.

Alternativ kann der Wirkbereich des Zinkens im Vergleich zum ursprünglichen Zinken insbesondere vergrößert sein. Beispielsweise kann der Wirkbereich mindestens verdoppelt, verdreifacht, vervierfacht oder verfünffacht werden.

Vorzugsweise kann der Wirkbereich verbreitert werden. So kann ein größerer Abschnitt des Bodens bearbeitet werden als ohne den Aufsatz. Ferner kann der Zinken aufgrund des Aufsatzes gegebenenfalls tiefer in das Erdreich eindringen. Auch die Wirktiefe kann durch den Aufsatz somit vergrößert werden.

Ferner kann ein Doppelzinken als Bearbeitungseinheit eingesetzt werden. Die einzelnen Zinken des Doppelzinkens können im Vergleich zum ursprünglichen Zinken dünner sein.

Der Zinken kann vorzugsweise als Federzinken ausgebildet sein, insbesondere als Striegelzinken, S-Zinken oder Gareeggenzinken. Alternativ kann der Zinken als Paddelzinken ausgebildet sein.

Die Zinken sind vorzugsweise parallel zu den ursprünglichen Zinken orientiert.

Nach einer Ausführungsform kann der Zinken abgewinkelt bzw. gekröpft sein. So kann der Zinken insbesondere einen Knick aufweisen. Vorzugsweise ist der Knick im unteren Drittel des Zinkens vorgesehen. Der Winkel zwischen den Schenkeln kann insbesondere zwischen 90° und 179°, vorzugsweise zwischen 135° und 170°, besonderes bevorzugt zwischen 150° und 160°, betragen.

Für den Aspekt abgewinkelter Zinken, insbesondere abgewinkelter Doppelzinken, wird auch unabhängig von einem Aufsatz bzw. einer Befestigungsvorrichtung Schutz beansprucht.

Die Ausbringungseinheit kann insbesondere Saatgut, Dünger und/oder Gülle ausbringen. So kann die Bearbeitungseinheit zumindest einen Teil eines Schleppschuhverteilers bilden. Schläuche können hierbei an der Befestigungsvorrichtung fixiert werden.

Die Erfindung betrifft auch eine Bodenbearbeitungsvorrichtung mit mehreren Zinken und zumindest einem erfindungsgemäßen Aufsatz. Vorzugsweise können auch mehrere Aufsätze vorgesehen sein. Insbesondere können mehrere Aufsätze nebeneinander angeordnet sein.

Beispielsweise können an sämtlichen Zinken Aufsätze befestigt sein. Die gesamte Bodenbearbeitungsvorrichtung kann auf diese Weise umgerüstet werden.

Gemäß einer Ausführungsform sind mehrere Aufsätze vorgesehen, wobei die Aufsätze miteinander verbunden oder verbindbar sind. Die Aufsätze können insbesondere über ein Verbindungselement, z.B. einen Karabiner oder einen Schäkel, miteinander verbunden sein. Die Stabilität wird dadurch weiter erhöht.

Über das Verbindungselement können die Aufsätze insbesondere starr oder beweglich miteinander verbunden oder verbindbar sein.

Es können auch Aufsätze vorgesehen sein, bei denen die Befestigungsvorrichtung lediglich eine Befestigungseinheit zur lösbaren Befestigung eines Zinkens aufweist.

Die Bodenbearbeitungsvorrichtung kann lediglich Aufsätze mit einer Befestigungseinheit oder lediglich Aufsätze mit zumindest zwei Befestigungseinheiten aufweisen. Auch eine, insbesondere abwechselnde, Kombination von Aufsätzen mit einer Befestigungseinheit und Aufsätzen mit zumindest zwei Befestigungseinheiten ist möglich.

Nach einer weiteren Ausführungsform sind die Zinken als Federzinken, insbesondere Striegelzinken, S-Zinken, Gareeggenzinken, oder als Paddelzinken ausgebildet.

Der Aufsatz kann somit an verschiedenen Zinken montiert werden. Unterschiedliche Bodenbearbeitungsvorrichtungen können auf diese Weise modifiziert werden. Die Erfindung betrifft auch ein System mit einer erfindungsgemäßen Bodenbearbeitungsvorrichtung mit wenigstens zwei Aufsätzen, welche jeweils unterschiedliche Bearbeitungseinheiten aufweisen und gegeneinander austauschbar sind.

Die Bodenbearbeitungsvorrichtung kann durch die unterschiedlichen Aufsätze schnell umgebaut werden und einen anderen Zweck erfüllen. Separate Bodenbearbeitungsvorrichtungen für verschiedene Arbeiten sind daher nicht notwendig, wodurch Kosten gespart werden können.

Neben der Stoppelbearbeitung und Strohverteilung kann die Bodenbearbeitungsvorrichtung somit auch insbesondere zum Striegeln gegen Unkraut, z.B. im Bio-Anbau, verwendet werden.

Alle hier beschriebenen Aspekte, Ausführungsformen und Merkmale der Erfindung können, insbesondere auch losgelöst von der konkreten Ausgestaltung, in deren Zusammenhang sie erwähnt werden, jeweils miteinander kombiniert werden. Insbesondere können alle Gegenstände der abhängigen Ansprüche untereinander und mit jedem Gegenstand der unabhängigen Ansprüche kombiniert werden.

Die Erfindung wird im Folgenden beispielhaft unter Bezugnahme auf die Zeichnungen beschrieben. Es zeigen:
- Fig. 1: eine perspektivische Vorderansicht einer ersten Ausführungsform eines erfindungsgemäßen Aufsatzes,
- Fig. 2: eine perspektivische Rückansicht des Aufsatzes gemäß Fig. 1,
- Fig. 3: eine Vorderansicht einer Bearbeitungseinheit des Aufsatzes gemäß Fig. 1,
- Fig. 4: eine Draufsicht einer Bearbeitungseinheit des Aufsatzes gemäß Fig. 1,
- Fig. 5: eine perspektivische Vorderansicht einer zweiten Ausführungsform eines erfindungsgemäßen Aufsatzes,
- Fig. 6: eine perspektivische Rückansicht des Aufsatzes gemäß Fig. 5,
- Fig. 7: eine perspektivische Vorderansicht einer dritten Ausführungsform eines erfindungsgemäßen Aufsatzes, und
- Fig. 8: eine perspektivische Rückansicht des Aufsatzes gemäß Fig. 7.

Zunächst ist zu bemerken, dass die dargestellten Ausführungsformen rein beispielhafter Natur sind. Insbesondere können durch den Aufsatz auch mehr als zwei Zinken verbunden sein. Auch können mehr oder weniger Bearbeitungseinheiten an der Befestigungsvorrichtung fixiert sein. Die Merkmale einer Ausführungsform können auch beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

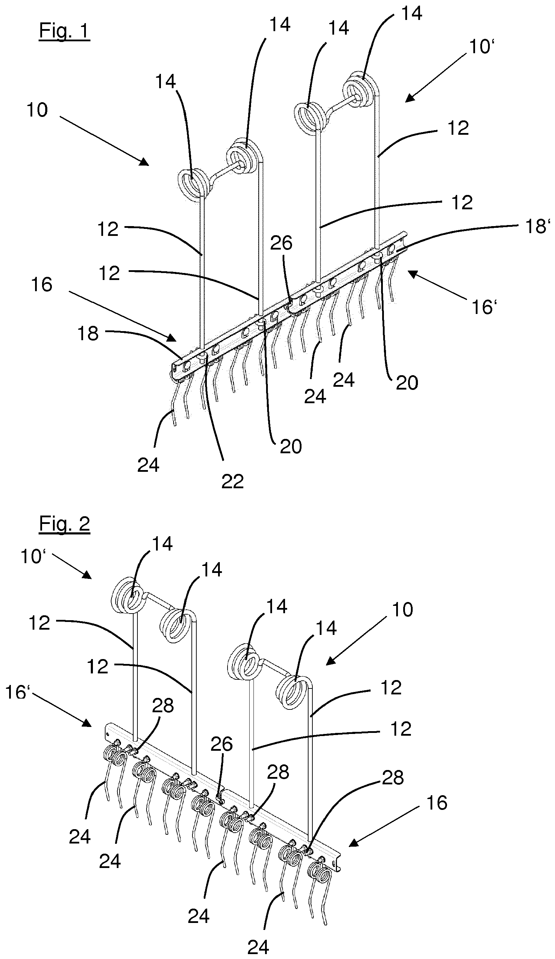

Fig. 1 zeigt zwei herkömmliche, nebeneinander angeordnete Doppelzinken 10, 10'. Die Doppelzinken 10, 10' umfassen jeweils zwei Zinken 12, die über Federn 14 miteinander verbunden sind.

Die Doppelzinken 10, 10' sind einstückig geformt. Ein Metallstab mit einem runden Durchmesser wird dabei teilweise spiralförmig verbogen. Die Spiralen bilden die Federn 14, welche einerseits eine seitliche Stoßfederung bewirken und andererseits zur Befestigung an einer Bodenbearbeitungsvorrichtung dienen.

An den Endbereichen der Zinken 12 sind Aufsätze 16, 16' befestigt. Die Aufsätze 16, 16' umfassen jeweils eine als Träger 18, 18' ausgebildete Befestigungsvorrichtung mit je zwei Befestigungseinheiten 20.

Die Befestigungseinheiten 20 umfassen jeweils einen U-Haken 22, in den der Zinken 12 eingesteckt und aufgenommen werden kann.

An dem Träger 18, 18' sind mehrere als abgewinkelte Doppelzinken 24 ausgebildete Bearbeitungseinheiten fixiert.

Die beiden nebeneinander angeordneten Aufsätze 16, 16' sind über ein als Schäkel 26 ausgebildetes Verbindungselement miteinander verbunden.

Wie in Fig. 2 gezeigt, sind die Schenkel der U-Haken 22 über eine Schraubeinheit 28 mit dem Träger 18, 18' verschraubt.

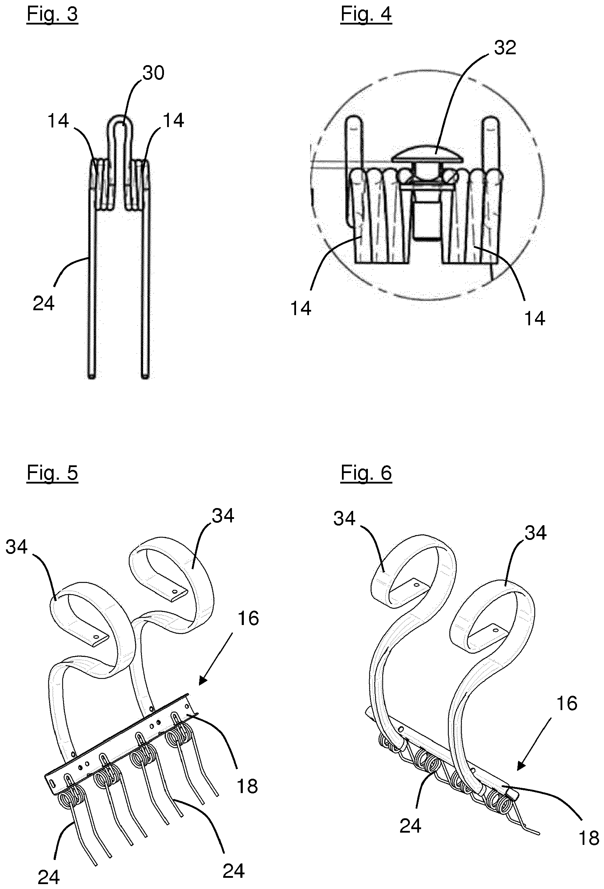

Eine als Doppelzinken 24 ausgebildete Bearbeitungseinheit ist in Fig. 3 gezeigt. Ein Verbindungssteg 30 zwischen den Federn 14 ist dabei nach oben gezogen und bildet eine Befestigungsschlaufe. Die Befestigungsschlaufe 30 kann geschlossen oder einseitig offen sein.

Die hochgezogene Befestigungsschlaufe 30 ermöglicht einen geraden Einbau der Bearbeitungseinheit 24.

Wie in Fig. 4 dargestellt ist, kann die Befestigungsschlaufe 30 über eine Schraubeinheit 32 am Träger 18, 18' fixiert werden.

Fig. 5 und Fig. 6 zeigen eine weitere Ausführungsform. Der Aufsatz 16 ist hierbei an Gareeggenzinken 34 angeordnet. Der Aufsatz 16 kann grundsätzlich an beliebigen Zinken, z.B. Doppelzinken 10, 10'oder Gareeggenzinken 34, montiert werden und ist somit vielseitig einsetzbar.

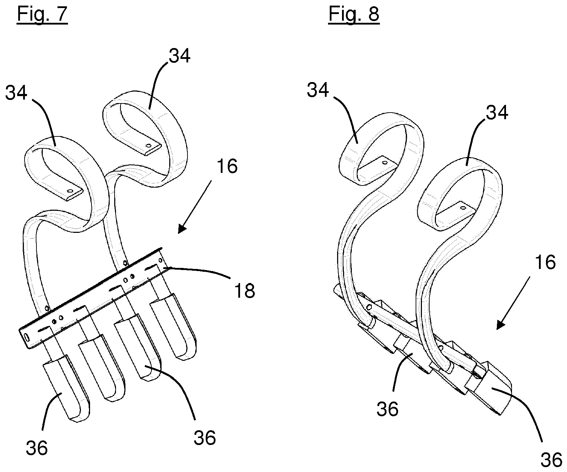

Wie in Fig. 7 und 8 gezeigt ist, können auch Ausbringungseinheiten 36 als Bearbeitungseinheiten eingesetzt werden. Über die Ausbringungseinheiten 36 kann beispielsweise Saatgut, Dünger und/oder Gülle ausgebracht werden, die Ausbringungseinheiten 36 bilden gewissermaßen einen Teil eines Schleppschuhverteilers.

Auch ein Aufsatz 16 mit Ausbringungseinheiten 36 kann an beliebigen Zinken, insbesondere auch an Doppelzinken 10, 10' oder Gareeggenzinken 34 befestigt werden.

### Bezugszeichenliste

- 10, 10': Doppelzinken
- 12: Zinken
- 14: Feder
- 16, 16': Aufsatz
- 18, 18': Träger, Befestigungsvorrichtung
- 20: Befestigungseinheit
- 22: U-Haken
- 24: Doppelzinken, Bearbeitungseinheit
- 26: Schäkel, Verbindungselement
- 28: Schraubeinheit
- 30: Verbindungssteg, Befestigungsschlaufe
- 32: Schraubeinheit
- 34: Gareeggenzinken
- 36: Ausbringungseinheit, Bearbeitungseinheit

## Patentansprüche

1. Aufsatz (16, 16') für mehrere Zinken (12) einer Bodenbearbeitungsvorrichtung, umfassend
eine Befestigungsvorrichtung (18, 18') mit zumindest zwei Befestigungseinheiten (20), welche zur lösbaren Befestigung an unterschiedlichen Zinken (12) ausgebildet sind, und
zumindest eine Bearbeitungseinheit (24), welche an der Befestigungsvorrichtung (18, 18') fixiert oder fixierbar ist.

2. Aufsatz (16, 16') nach Anspruch 1,
**dadurch gekennzeichnet,**
**dass** die Befestigungseinheit (20) eine Einhänge-, Klemm-, Steck-, Rast- und/oder Schraubeinheit (28) umfasst.

3. Aufsatz (16, 16') nach Anspruch 1 oder 2,
**dadurch gekennzeichnet,**
**dass** die Befestigungseinheit (20) einen U-Haken (22) umfasst.

4. Aufsatz (16, 16') nach einem der vorhergehenden Ansprüche,
**dadurch gekennzeichnet,**
**dass** die Befestigungsvorrichtung einen sich quer erstreckenden Träger (18, 18'), insbesondere eine Metallleiste, umfasst, welcher die Befestigungseinheiten (20) aufweist oder an dem die Befestigungseinheiten (20) angeordnet sind.

5. Aufsatz (16, 16') nach einem der vorhergehenden Ansprüche,
**dadurch gekennzeichnet,**
**dass** die Bearbeitungseinheit (24) von der Befestigungsvorrichtung (16, 16') lösbar ist.

6. Aufsatz (16, 16') nach einem der vorhergehenden Ansprüche,
**dadurch gekennzeichnet,**
**dass** die Bearbeitungseinheit (24) einen Zinken, vorzugsweise einen Doppelzinken, eine Gänsefußschare oder eine Ausbringungseinheit, insbesondere für Saatgut, Dünger und/oder Gülle, umfasst oder dazu ausgebildet ist.

7. Aufsatz (16, 16') nach einem der vorhergehenden Ansprüche,
**dadurch gekennzeichnet,**
**dass** die Bearbeitungseinheit (24) einen Zinken, vorzugsweise einen Doppelzinken, umfasst, welcher abgewinkelt ist.

8. Bodenbearbeitungsvorrichtung mit mehreren Zinken (12) und zumindest einem Aufsatz (16, 16') nach einem der vorhergehenden Ansprüche.

9. Bodenbearbeitungsvorrichtung nach Anspruch 8,
**dadurch gekennzeichnet,**
**dass** mehrere Aufsätze (16, 16') vorgesehen sind, wobei die Aufsätze (16, 16') miteinander verbunden oder verbindbar sind.

10. Bodenbearbeitungsvorrichtung nach Anspruch 8 oder 9,
**dadurch gekennzeichnet,**
**dass** die Zinken (12) als Federzinken, insbesondere Striegelzinken, S-Zinken, Gareeggenzinken, oder als Paddelzinken ausgebildet sind.

11. System mit einer Bodenbearbeitungsvorrichtung nach einem der Ansprüche 8 bis 10, mit wenigstens zwei Aufsätzen (16, 16'), welche jeweils unterschiedliche Bearbeitungseinheiten (24) aufweisen und gegeneinander austauschbar sind.
